# EUROPÄISCHE PATENTANMELDUNG

(11) **EP 4 675 125 A1**
(43) Veröffentlichungstag der Anmeldung: **07.01.2026**
(21) Anmeldenummer: 24186626.8
(22) Anmeldetag: 04.07.2024
(51) Int. Cl.: F16F 9/32, F16F 9/346, F16F 9/20

(54) **STOSSDÄMPFER**

(71) Anmelder: Driveman GmbH, 58339 Breckerfeld (DE)
(72) Erfinder: Schnippering, Axel, 58339 Breckerfeld (DE)
(74) Vertreter: Patentanwälte Dörner & Kötter PartG mbB

(57) **Zusammenfassung**

Die Erfindung betrifft einen Stoßdämpfer, umfassend einen mit einem Fluid befüllten Zylinder (1) und eine in diesem geführten Kolbenstange (3), wobei die Kolbenstange (3) in den Zylinder (1) hinein oder durch ihn hindurchgeführt ist und mit wenigstens einem Kolben (4) versehen ist, wobei in dem Zylinder (1) den wenigstens einen Kolben (4) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (4), wodurch zwischen dem wenigstens einen Kolben (4) und der wenigstens einen Dämpferhülse (2) ein Ringspalt (43) gebildet ist und zwischen der wenigstens einen Dämpferhülse (2) und dem Zylinder (1) ein Mantelspalt (12) gebildet ist, dadurch gekennzeichnet, dass der Mantelspalt (12) an wenigstens einer Seite über wenigstens einen Verbindungskanal (57) mit dem Zylinderinnenraum verbunden ist, wobei in dem Verbindungskanal (57) ein Drosselventil angeordnet ist.

## Beschreibung

Die Erfindung betrifft einen Stoßdämpfer nach dem Oberbegriff des Patentanspruchs 1.

Stoßdämpfer kommen beispielsweise bei Fahrwerken von Radfahrzeugen im Verbund mit einer Federung zum Einsatz, um Schwingungen der gefederten Masse zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von Fahrbahnunebenheiten ins Fahrzeug eingeleiteten Stößen; die Aufgabe kommt der Federung zu. Stoßdämpfer haben die Aufgabe, Schwingungen des Fahrzeugaufbaus auf die Tragfederung oder auch Schwingungen der Räder auf die Reifenfederung zu dämpfen. Stoßdämpfer werden darüber hinaus in den unterschiedlichsten Bereichen eingesetzt, beispielsweise auch zur Schwingungsdämpfung von Maschinen oder Maschinenteilen, aber auch beispielweise im Möbelbau zum Dämpfen von Klappenbewegungen.

Bei Fahrzeugen liegt die primäre Aufgabe einer Feder innerhalb der Federung darin, der Masse des Fahrzeugaufbaus und des Fahrers entgegenzuwirken. Bei Zweiradfahrzeugen kommen regelmäßig Spiralfedern zum Einsatz. Die Federkraft einer Spiralfeder weist im Regelfall einen linearen Verlauf zum eingefederten Weg auf. Sie befindet sich zu Beginn einer Belastung in einem Ruhezustand und trägt das Gewicht von Fahrzeug und Fahrer. Eine niedrige Federkonstante (Federrate) sorgt für ein komfortables Fahrgefühl. Während des Federweges erhöht sich die Federkraft. Eine niedrige und komfortable Federkonstante ermöglicht aber ein schnelles und einfaches Durchschlagen. Eine hohe Federkonstante hingegen verringert das Durchschlagen, verschlechtert aber den Fahrkomfort. Leichte bis mittlere Stöße durch Straßenunebenheiten werden durch eine höhere Federkonstante weniger absorbiert, und über das Fahrzeug an den Fahrer durchgeleitet. Der Negativfederweg (Zugstufe) ergibt sich durch die Auflastung von Fahrer und Fahrzeug. Eine weitere Einfederung (Druckstufe) erfolgt durch die Einwirkungen der Fahrbahnunebenheiten. Über die Einstellung der Vorspannung der Spiralfeder kann das Fahrergewicht angepasst werden.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird eine Fahrzeugfederung in dem Entspannungsvorgang innerhalb einer Schwingung gedämpft. In der Druckstufe erfolgt eine Dämpfung der Einfedergeschwindigkeit.

Stoßdämpfer sind im Fahrzeugbereich regelmäßig hydraulische Teleskopstoßdämpfer. Diese beruhen auf dem Prinzip, dass die Widerstandskraft gegen das Fließen des verdrängten Öls von der Fließgeschwindigkeit abhängt. In dem Stoßdämpfer wird Hydrauliköl über einen Kolben durch enge Bohrungen und Ventilsysteme gepresst. Die Dämpfungskraft, die der Dämpfergeschwindigkeit entgegenwirkt, steigt mit zunehmender Ein- bzw. Ausfedergeschwindigkeit des Kolbens an.

Nachteilig an den vorbekannten hydraulischen Stoßdämpfern (die, wie oben ausgeführt, tatsächlich Schwingungsdämpfer sind) ist, dass diese in einer Feder-Dämpfer-Anordnung die Stoßdämpfungswirkung der Feder in ihrem freischwingenden Mittelbereich durch ihre Schwingungsdämpfung beeinträchtigen. Dabei ist die Beeinträchtigung abhängig von der Geschwindigkeit des Kolbens.

Zur Behebung dieser Problematik wird in der DE 20 2023 102 485 U1 ein Stoßdämpfer vorgestellt, bei dem eine Beeinträchtigung der Stoßdämpfungswirkung einer angeordneten Federung in ihrem freischwingenden Mittelbereich vermieden ist. Hierzu ist in einem Zylinder eine Kolbenstange angeordnet, die durch diesen hindurchgeführt ist und die mit zwei beabstandet zueinander angeordneten Kolben versehen ist, in die umlaufend radial beabstandet zu der Kolbenstange Axialbohrungen eingebracht sind. An der jeweiligen Außenseite der Kolben ist jeweils eine Verschlussscheibe zum Verschließen der Axialbohrungen des zugeordneten Kolbens auf der Kolbenstange axial beweglich gelagert. Die Zylinderinnenwand weist zumindest bereichsweise einen sich in Axialrichtung stetig ändernden Durchmesser auf, wodurch eine wegabhängige Dämpfung bewirkt ist, über die eine Minimierung der Schwingungsdämpfung im freischwingenden Mittelbereich einer Federung ermöglicht ist. Dieser Stoßdämpfer hat sich in der Praxis bewährt und ermöglicht erstmals eine wegabhängige Dämpfung mit einer weitgehend ungedämpften Nulllage.

Als vorteilhaft bei dem vorbekannten Schwingungsdämpfer hat sich weiterhin eine Ausgestaltung erwiesen, bei der die Zylinderinnenwand durch die Innenwand einer in den Zylinder eingebrachten Dämpferhülse gebildet ist, deren Außendurchmesser kleiner als der Innendurchmesser des Zylinderrohrs ist. Hierdurch kann sich die Dämpferhülse bei einem Druckanstieg im Zylinder erweitern, wodurch der Ringspalt zwischen Dämpferhülse und Kolben vergrößert ist. Durch den so vergrößerten Ringspalt kann das Fluid besser abfließen. Bei geeigneter Elastizität des Materials der Dämpferhülse verliert der Stoßdämpfer seine Abhängigkeit von der Geschwindigkeit und nimmt nahezu eine reine Wegabhängigkeit an.

Beim Einsatz eines solchen Stoßdämpfers hat sich jedoch gezeigt, dass bei hoher Belastung des Stoßdämpfers sowie bei unterschiedlichen Temperaturbedingungen Abweichungen des gewünschten Dämpfungsverhaltens auftreten können. Zur Korrektur solcher Abweichungen wurde die Dämpfungshülse in der Zugstufe und in der Druckstufe mit einer Ausgleichsbohrung mit sehr kleinem Durchmesser versehen, um einen Ausgleich bei im Mantelspalt auftretendem Überdruck versehen.

Wird die Kraft am Kolben durch Veränderung von Parametern, wie zum Beispiel eine Verkleinerung der Ringspaltgröße oder eine Erhöhung der Viskosität des Fluids, erhöht, so vergrößert sich die Ausdehnung der Hülse und damit das Volumen im Inneren der Dämpferhülse. Gleichzeitig verringert sich das Volumen im Mantelspalt und das Fluid muss vom Mantelspalt in den Zylinderraum, der vorliegend durch den Innenraum der Dämpferhülse gebildet ist, umgeleitet werden. Der hohe Überdruck über dem Kolben und der hohe Unterdruck unter dem Kolben werden grundsätzlich im Mantelspalt ausgeglichen, solange diese Bohrungen geometrisch gleich geformt sind. Das sorgt für ein ausgeglichenes Druckverhalten im Mantelspalt. Bei höherer Leistungsanforderung wirkt aber der zusätzliche Überdruck im Mantelspalt und der zusätzliche Unterdruck unterhalb des Kolbens auf die Ausgleichsbohrung in der Zugstufe. Zum einen muss die Ölmenge der druckseitigen Ausgleichsbohrung abgeführt werden und zum anderen addiert sich die oben genannte Volumenänderung hinzu. Dies hat zur Folge, dass das Ausgleichsbohrloch der Zugseite überbelastet wird und die addierten Ölmengen nicht ausreichend abgeführt werden können. Dadurch bleibt ein gewisser Überdruck im Mantelspalt bzw. ein gewisser Unterdruck im Innern der Hülse auf der Zugseite. Dieses unerwünschte Druckverhalten wirkt auf die Hülse und damit auf die Dämpfkraft in der Art, dass die Dämpfkraft ungewünscht weiter nach oben steigt. Damit verfälscht sich das gewünschte degressive Dämpferverhalten.

Hier will die Erfindung Abhilfe schaffen. Der Erfindung liegt die Aufgabe zu Grunde einen Stoßdämpfer bereitzustellen, bei dem auch bei hoher Arbeitsleistung sowie bei Änderungen von Parameter, die zu einer Erhöhung der Kraft am Kolben führen, ein definiertes Dämpfungsverhalten erzielbar ist. Gemäß der Erfindung wird diese Aufgabe durch einen Stoßdämpfer mit den Merkmalen des kennzeichnenden Teils des Patentanspruchs 1 gelöst.

Mit der Erfindung ist einen Stoßdämpfer bereitgestellt, bei dem auch bei hoher Arbeitsleistung sowie bei Änderungen von Parameter, die zu einer Erhöhung der Kraft am Kolben führen, ein definiertes Dämpfungsverhalten erzielbar ist. Dadurch, dass der Mantelspalt an wenigstens einer Seite, vorzugsweise an beiden Seiten über wenigstens einen Verbindungskanal mit dem Zylinderinnenraum verbunden ist, wobei in dem Verbindungskanal ein Drosselventil angeordnet ist, ist ein definierter Druckausgleich zwischen Mantelspalt und Zylinderraum ermöglicht, wodurch das Druckverhältnis zwischen dem Mantelspalt und dem Zylinderinnenraum einstellbar ist. Dabei ist das Drosselventil bevorzugt derart ausgebildet, dass ein Durchfluss des Fluids nur in Richtung vom Zylinderinnenraum in den Mantelspalt gedrosselt ist.

In der Druckstufe wird das Fluid über den bewegten Kolben in der Dämpferhülse auf Überdruck gebracht. Ein sehr kleiner Anteil des vom Kolben verdrängten Fluidvolumenstroms tritt in den Verbindungskanal ein und wird durch das Drosselventil gebremst, wodurch es gedrosselt in den Mantelspalt austritt. In der Zugstufe tritt das Fluid im Mantelspalt durch den vorherrschenden Druck in den Verbindungskanal ein. In dieser Fließrichtung wird der Fluidvolumenstrom nicht gedrosselt. Es tritt vielmehr nahezu ungedrosselt in den derzeitigen Unterdruckraum in den Zylinderraum ein. Die Fließgeschwindigkeit in dem durch den Verbindungskanal gebildeten Ausgleichsbereich der Zugstufe ist damit signifikant höher als die Fließgeschwindigkeit in dem durch den Verbindungskanal gebildeten Ausgleichsbereich der Druckstufe. Der zusätzliche unerwünschte Druck im Mantelspalt kann jetzt ungehindert durch diese Zugstufenöffnung mit abgeleitet werden. Ist der Mantelspalt an beiden Seiten über wenigstens einen Verbindungskanal mit einem Drosselventil mit dem Zylinderinnenraum verbunden, wird dieser Effekt in beiden Bewegungsrichtungen des Kolbens erzielt. Es hat sich gezeigt, dass hierdurch auch bei großer Arbeitsleistung mit Änderungen am Kolben anliegenden Kraft das gewünschte degressive Dämpferverhalten zuverlässig erzielbar ist.

Unter dem Begriff "Zylinderraum" ist vorliegend der von dem wenigstens einen Kolben befahrbare und mit Hydrauliköl befüllte Innenraum zu verstehen, der vorliegend durch die wenigstens eine Dämpferhülse begrenzt ist. Die Dämpferhülse ist bevorzugt aus Kunststoff hergestellt.

In Weiterbildung der Erfindung ist die wenigstens eine Dämpferhülse über wenigstens einen Stopfen in dem Zylinder gehalten, wobei ein Verbindungskanal und das Drosselventil in dem Stopfen angeordnet sind. Bevorzugt ist an beiden Enden des Zylinders jeweils ein Stopfen angeordnet, der einen Verbindungskanal mit einem Drosselventil aufweist und über den eine Dämpferhülse der wenigstens einen Dämpferhülse gehalten ist. Hierdurch ist der zwischen Dämpferhülse und Zylinder gebildete Mantelspalt an beiden Enden - somit in der Druckstufe und in der Zugstufe - über einen Verbindungskanal mit dem Zylinderinnenraum verbunden.

In Ausgestaltung der Erfindung ist das Drosselventil durch einen Abschnitt des Verbindungskanal gebildet, der die Kanalstruktur eines Teslaventils aufweist. Durch die Anordnung der Segmente eines Teslaventils kann ein Volumenstrom in einer Richtung ungehindert fließen, währen in der anderen Richtung ein Teil des Volumenstroms in einer Schlaufe geführt wird und den Durchfluss durch Verwirbelungen drosselt. Je höher der Druck des Volumenstroms ist, um so größer ist die Drosselung und umso mehr nimmt der Durchfluss ab. Ein Teslaventil kommt so ohne mechanische Teile aus und ist sehr bauraumsparend realisierbar.

In weiterer Ausgestaltung der Erfindung ist der Verbindungskanal zumindest bereichsweise durch einen Abschnitt der Dämpferhülse begrenzt. Hierdurch ist die Realisierung des ein Teslaventil enthaltenen Verbindungskanals vereinfacht. Dieser kann einfach in eine der Dämpferhülse zugewandte Oberfläche eingefräst oder eingeformt werden und wird durch Verdeckung mit einem Bereich der Dämpferhülse verschlossen.

In Weiterbildung der Erfindung weist der Verbindungskanal zumindest an einem Ende einem querschnittsvergrößerten Abschnitt auf. Hierdurch ist die Einleitung eines Volumenstroms in den Verbindungskanal unterstützt.

In Ausgestaltung der Erfindung ist der Stopfen aus einem weitgehend nicht elastischen Material, vorzugsweise aus Metall hergestellt. Hierdurch ist einer Beeinträchtigung des Verbindungskanals in dem Stopfen durch Verformung vermieden. Bevorzugt ist der Stopfen über wenigstens einen Dichtring, insbesondere einen O-Ring, gegenüber dem Zylinder abgedichtet.

In weiterer Ausgestaltung der Erfindung weist der Stopfen einen zumindest bereichsweise umlaufenden Kragen auf, in dem der Verbindungskanal zumindest bereichsweise angeordnet ist und an dem die Dämpferhülse anliegt. Hierdurch ist ein formschlüssiger Halt der Dämpferhülse in dem Stopfen erzielt.

In Weiterbildung der Erfindung erstreckt sich ein endseitig des Verbindungskanals angeordneter erster vorzugsweise querschnittserweiterter Abschnitt axial bis zum freien Ende des Kragens und ein zweiter endseitig des Verbindungskanals angeordneter vorzugsweise querschnittserweiterter zweiter Abschnitt erstreckt sich zumindest bereichsweise radial in Richtung der Zylindermittelachse über die Dämpferhülse hinaus. Hierdurch ist die Verbindung des Zylinderinnenraums mit dem Mantelspalt über den ein Drosselventil, insbesondere ein Teslaventil aufweisenden Verbindungskanal weiter verbessert. Durch eine querschnittserweiterte Ausführung des ersten und/oder des zweiten Abschnitts ist der Eintritt des Fluids in den Verbindungskanal verbessert.

In weiterer Ausgestaltung der Erfindung ist an dem Stopfen ein Innenstützring angeordnet, der an der Dämpferhülse anliegt. Hierdurch ist eine dichtende Anlage des endseitigen Abschnitts der Dämpferhülse an der Innenwand des Stopfens erzielt, wodurch eine dichte Abdeckung des Verbindungskanals gewährleistet ist.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Dabei kommen gleichen Teilen gleiche Bezugsziffern zu. Es zeigen:
- Figur 1:: die schematische Darstellung eines Stoßdämpfers im Längsschnitt in Mittelstellung
a) mit geschlossenem Ringspalt zwischen Kolben und Dämpferhülse;
b) mit erweitertem Ringspalt zwischen Kolben und Dämpferhülse;

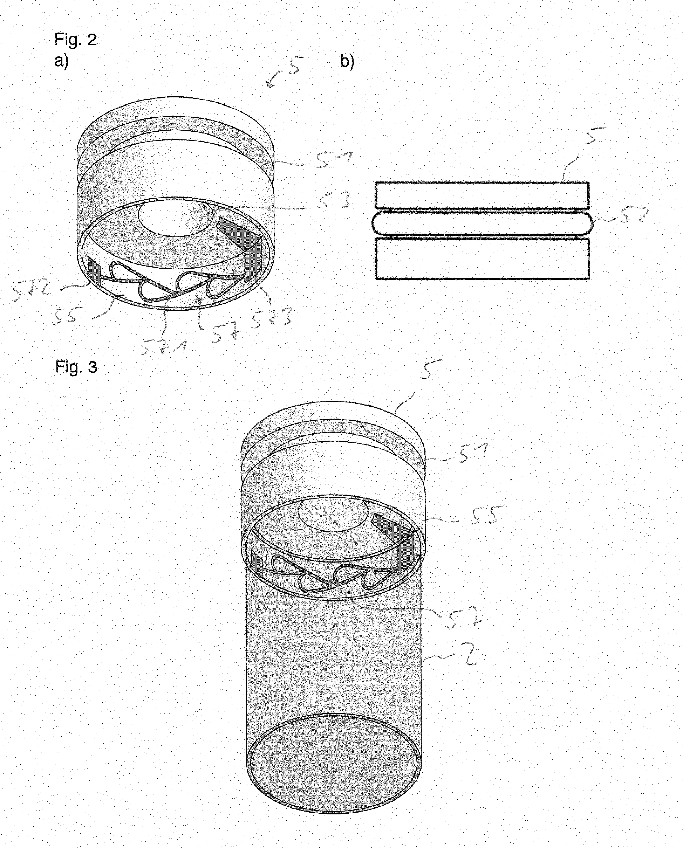

- Figur 2:: die schematische Darstellung eines Stopfens des Stoßdämpfers aus Figur 1
a) in räumlicher Ansicht;
b) in der Seitenansicht;
- Figur 3:: die schematische Darstellung des Stopfens aus Figur 2 mit eingesetzter Dämpfungshülse und
- Figur 4:: die schematische räumliche Darstellung der beiden Stopfen des Stoßdämpfers aus Figur 1.

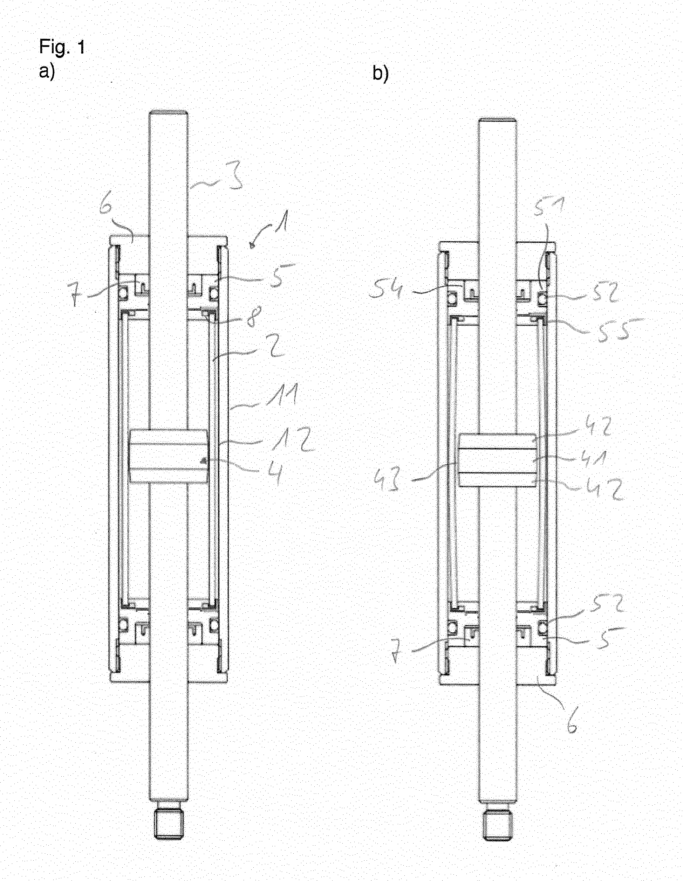

Der als Ausführungsbeispiel gemäß Figur 1 gewählte Stoßdämpfer umfasst einen mit einem Fluid, vorliegend einem Hydrauliköl HVLP 32, gefüllten Zylinder 1, in den eine Dämpferhülse 2 eingebracht ist, durch die eine Kolbenstange 3 verschiebbar geführt ist, auf der ein Kolben 4 angeordnet ist. Die Dämpferhülse 2 ist an ihren beiden Enden jeweils mit einem Stopfen 5 versehen. Über die beiden Stopfen 5 ist die Dämpferhülse 2 in dem Zylinder 1 gehalten. Der Zylinder ist an beiden Enden jeweils über ein Verschlussstück 6 verschlossen, durch den die Kolbenstange 3 geführt ist.

Der Zylinder 1 umfasst ein Zylinderrohr 11, das an beiden Enden jeweils mit einem Verschlussstück 6 verschlossen ist, an das sich ein Stopfen 5 anschließt, der ein Dichtungspaket 7 aufnimmt, über das der Stopfen 5 gegenüber der axial beweglichen Kolbenstange 3 abgedichtet ist. Der Stopfen 5 ist über einen O-Ring 52 gegenüber dem Zylinderrohr 11 abgedichtet. Die an beiden Enden des Zylinderrohres 11 an dem Verschlussstück 6 anliegenden Stopfen 5 sind im Ausführungsbeispiel identisch ausgebildet.

Die Dämpferhülse 2 ist im Ausführungsbeispiel aus einem thermoplastischen Kunststoff, vorliegend Polyamid hergestellt und zwischen den beidseitig in dem Zylinderrohr 11 angeordneten Stopfen 5 axial gehalten. Die Dämpferhülse 2 ist dabei jeweils in einen hierfür an dem jeweiligen Stopfen 5 angeordneten umlaufenden Kragen 55 eingeschoben. Innen ist dem Kragen 55 gegenüberliegend in die Dämpferhülse 2 ein Innenstützring 8 eingebracht, durch den die Dämpferhülse 2 gegen den Kragen 55 angedrückt wird. Der Außendurchmesser der Dämpferhülse 2 ist etwa vier Prozent geringer gegenüber dem Innendurchmesser des Zylinderrohres 11, wodurch zwischen dem Zylinderrohr 11 und der Dämpferhülse 2 ein Mantelspalt 12 gebildet ist. Die Dämpferhülse 2 ist so axial fixiert schwimmend in dem Zylinderrohr 11 gehalten.

Auf die Kolbenstange 3 ist der Kolben 4 aufgebracht, der hierzu eine axiale Durchbohrung aufweist, durch welche die Kolbenstange 3 geführt ist. Der Kolben 4 weist einen zylindrischen Abschnitt 41 auf, an den sich zu beiden Seiten jeweils ein konisch sich verjüngender Abschnitt 42 anschließt.

Der Stopfen 5 ist im Ausführungsbeispiel als im Wesentlichen zylindrisch ausgebildetes Aluminiumteil ausgeführt und weist außen umlaufend eine Nut 51 zur Aufnahme eines O-Rings 52 auf. Mittig ist durch den Stopfen 5 eine Bohrung 53 zur Durchführung der Kolbenstange 3 eingebracht. An seinem dem Verschlussstück 6 zugewandten Ende ist konzentrisch zur Bohrung 53 eine zylindrische Ausnehmung 54 zur Aufnahme des Dichtungspakets 7 eingebracht. Auf seiner dem Dichtungspaket 7 abgewandten Seite in an dem Stopfen 5 ein umlaufender Kragen 55 angeordnet, der einen Absatz 56 begrenzt und dessen Innendurchmesser im Wesentlichen dem Außendurchmesser der Dämpferhülse 2 entspricht, die an diesem anliegt.

Auf seiner der Dämpferhülse 2 zugewandten Innenseite ist in den Kragen 55 eine Verbindungskanal 57 eingefräst. Der Verbindungskanal 57 umfasst eine Teslaventil-Kanalstruktur 571, die an einem Ende in einen ersten querschnittsvergrößerten Abschnitt 572 übergeht, die sich bis zum freien Ende des Kragens 55 erstreckt und in dem zwischen dem Zylinderrohr 11 und der Dämpferhülse 2 gebildeten Mantelspalt 12 mündet. An seinem anderen Ende geht die Teslaventil-Kanalstruktur 571 in einen zweiten querschnittsvergrößerten Abschnitt 573 über, der sich in Richtung des Absatzes 56 erstreckt und über den Kragen 55 hinaus über den Absatz 56 geführt ist, wo er beabstandet zu der Bohrung 53 endet. Über den zweiten querschnittsvergrößerten Abschnitt 573 ist der Verbindungskanal 57 mit dem durch die Dämpferhülse 2 begrenzten Zylinderinnenraum verbunden. Der Verbindungskanal 57 ist über die Dämpferhülse 2, die an dem Kragen 55 anliegt, in radialer Richtung verschlossen.

Bei Bewegung der Kolbenstange 3 wird das in dem Zylinder 1 befindliche Hydrauliköl durch den Kolben 4 komprimiert. Das Hydrauliköl wird durch den zwischen dem zylindrischen Abschnitt 41 des Kolbens 4 und der Innenwand der Dämpferhülse 2 gebildeten Ringspalt 43 hindurchgepresst.

Bei zunehmender Kolbengeschwindigkeit erhöht sich der Druck vor dem Kolben 4 weiter und das komprimierte Hydrauliköl drückt die Dämpferhülse 2 zusätzlich weiter nach außen in den Mantelspalt 12. Der dadurch erweiterte Ringspalt 46 lässt das Hydrauliköl besser abfließen und der Druck vor dem Kolben 4 wird reduziert. Durch den E-Modul Wert des Materials der Dämpferhülse 2 verhält sich diese wie ein Ventil, das bei steigendem Druck vor dem Kolben 4 das Hydrauliköl leichter abfließen lässt und damit die auf den Kolben 4 einwirkenden Druckkräfte einstellt.

Durch die radiale Ausdehnung der Dämpferhülse 2 wird das Volumen des Mantelspalts 13 komprimiert, wodurch der Druck in dem Mantelspalt 12 steigt. Hierdurch wird aus dem Mantelspalt 12 ein Hydraulikölvolumenstrom in Richtung Zugstufe geleitet und tritt durch den ersten querschnittsvergrößerten Abschnitt 572 in die Teslaventil-Kanalstruktur 571 des Verbindungskanals 57 ein. Die in dieser Fließrichtung günstigere Kanalstruktur fördert das Fluid nahezu ungedrosselt durch das Teslaventil hindurch, wonach es durch den zweiten querschnittsvergrößerten Abschnitt 573 in den Zylinderinnenraum eingeleitet wird.

Ein geringer Anteil des vom Kolben 4 verdrängten Hydrauliköls tritt durch den zweiten querschnittsvergrößerten Abschnitt 573 aus dem Zylinderinnenraum in den Verbindungskanal 57 ein und durchläuft die Teslaventil-Kanalstruktur 571. In dieser Fließrichtung bremsen die auftretenden Verwirbelungen des Hydrauliköls in der Kanalstruktur den Durchfluss, wodurch die Wirkung eines Drosselventils gebildet ist. Das Hydrauliköl wird hierdurch mit einem gedrosselten Volumenstrom durch den ersten querschnittsvergrößerten Abschnitt 572 aus dem Verbindungskanal 57 in den Mantelspalt 12 eingeleitet.

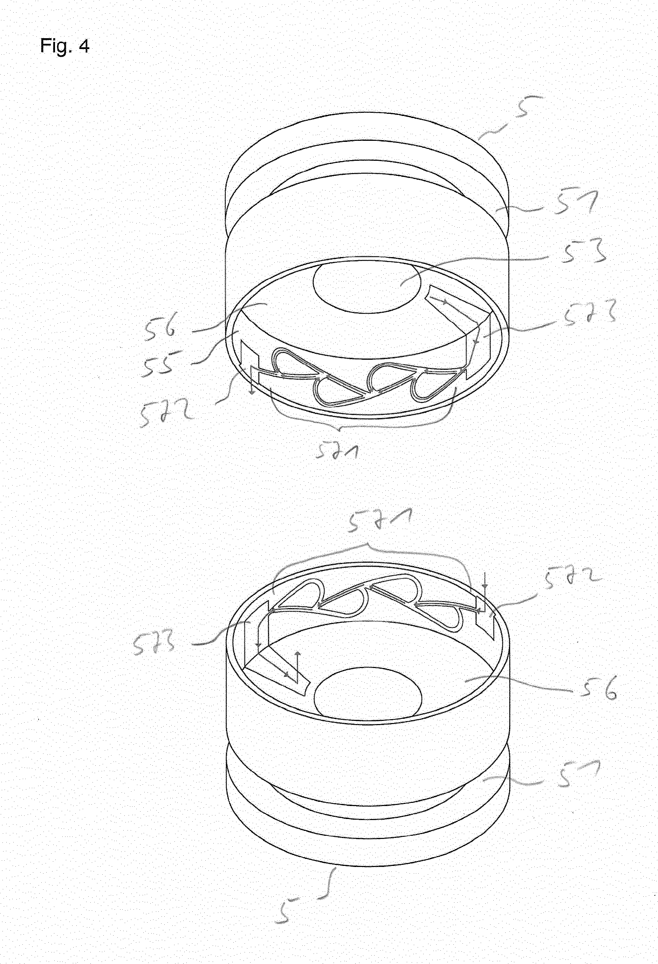

Die Fließgeschwindigkeit in dem durch den Verbindungskanal 57 gebildeten Ausgleichsbereich der Zugstufe ist damit signifikant höher als die Fließgeschwindigkeit in dem durch den Verbindungskanal 57 gebildeten Ausgleichsbereich der Druckstufe. Der zusätzlich unerwünschte Druck im Mantelspalt kann jetzt ungehindert durch diese Zugstufenöffnung mit abgeleitet werden (vgl. Figur 4).

Das Drosselventil ist in dem Verbindungskanal 57 durch die in den Kragen 55 des Stopfens 5 eingebrachte Teslaventil-Kanalstruktur 571 gebildet, durch die in bekannter Weise durch die Hintereinanderreihung von Tesla-Schleifen die gewünschte Drosselwirkung ohne das Erfordernis mechanischer Teile erzielt ist. Im Ausführungsbeispiel sind die strukturierten Vertiefungen durch Fräsen in den Kragen eingebracht. Diese Vertiefungen können selbstverständlich auch durch andere Techniken wie beispielsweise durch Lasergravurtechnik, Ätztechnik oder durch Prägetechnik in das Material des Kragens 55 Stopfens 5 eingebracht werden. In radialer Richtung sind die Vertiefungen durch die an dem Kragen 55 anliegende und durch den Innenstützring 8 an diesen angedrückte Dämpferhülse verschlossen, wodurch der Verbindungskanal 57 begrenzt ist.

## Patentansprüche

1. Stoßdämpfer, umfassend einen mit einem Fluid befüllten Zylinder (1) und eine in diesem geführten Kolbenstange (3), wobei die Kolbenstange (3) in den Zylinder (1) hinein oder durch ihn hindurchgeführt ist und mit wenigstens einem Kolben (4) versehen ist, wobei in dem Zylinder (1) den wenigstens einen Kolben (4) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (4), wodurch zwischen dem wenigstens einen Kolben (4) und der wenigstens einen Dämpferhülse (2) ein Ringspalt (43) gebildet ist und zwischen der wenigstens einen Dämpferhülse (2) und dem Zylinder (1) ein Mantelspalt (12) gebildet ist, **dadurch gekennzeichnet, dass** der Mantelspalt (12) an wenigstens einer Seite über wenigstens einen Verbindungskanal (57) mit dem Zylinderinnenraum verbunden ist, wobei in dem Verbindungskanal (57) ein Drosselventil angeordnet ist.

2. Stoßdämpfer nach einem der vorgenannten Ansprüche, **dadurch gekennzeichnet, dass** das Drosselventil derart ausgebildet ist, dass ein Durchfluss des Fluids nur in Richtung vom Zylinderinnenraum in den Mantelspalt (12) gedrosselt ist.

3. Stoßdämpfer nach Anspruch 1 oder 2, **dadurch gekennzeichnet, dass** die wenigstens eine Dämpferhülse (2) über wenigstens einen Stopfen (5) in dem Zylinder (1) gehalten ist, wobei ein Verbindungskanal (57) und das Drosselventil in dem Stopfen angeordnet sind.

4. Stoßdämpfer nach Anspruch 3, **dadurch gekennzeichnet, dass** an beiden Enden des Zylinders (1) jeweils ein Stopfen (5) angeordnet ist, der einen Verbindungskanal (57) mit einem Drosselventil aufweist und über den eine Dämpferhülse (2) der wenigstens einen Dämpferhülse gehalten ist.

5. Stoßdämpfer nach einem der vorgenannten Ansprüche, **dadurch gekennzeichnet, dass** das Drosselventil durch einen Abschnitt des Verbindungskanal gebildet ist, der die Kanalstruktur eines Teslaventils (571) aufweist.

6. Stoßdämpfer nach einem der Ansprüche 3 bis 5, **dadurch gekennzeichnet, dass** der Verbindungskanal (57) zumindest bereichsweise durch einen Abschnitt der Dämpferhülse (2) begrenzt ist.

7. Stoßdämpfer nach einem der vorgenannten Ansprüche, **dadurch gekennzeichnet, dass** der Verbindungskanal (57) zumindest an einem Ende einem querschnittsvergrößerten Abschnitt (572, 573) aufweist.

8. Stoßdämpfer nach einem der Ansprüche 3 bis 7, **dadurch gekennzeichnet, dass** der Stopfen (5) aus einem weitgehend nicht elastischen Material, vorzugsweise aus Metall hergestellt ist.

9. Stoßdämpfer nach einem der Ansprüche 3 bis 8 **dadurch gekennzeichnet, dass** der Stopfen (5) über wenigstens einen Dichtring, insbesondere einen O-Ring (52), gegenüber dem Zylinder (1) abgedichtet ist.

10. Stoßdämpfer nach einem der Ansprüche 3 bis 9, **dadurch gekennzeichnet, dass** der Stopfen (5) einen zumindest bereichsweise umlaufenden Kragen (55) aufweist, in dem der Verbindungskanal (57) zumindest bereichsweise angeordnet ist und an dem die Dämpferhülse (2) anliegt.

11. Stoßdämpfer nach Anspruch 10, **dadurch gekennzeichnet, dass** ein erster endseitig des Verbindungskanals (57) angeordneter, vorzugsweise querschnittserweiterter Abschnitt (572) sich axial bis zum freien Ende des Kragens 55 erstreckt und zweiter endseitig des Verbindungskanals (57) angeordneter vorzugsweise querschnittserweiterter Abschnitt (573) sich zumindest bereichsweise radial in Richtung der Zylindermittelachse über die Dämpferhülse (2) hinaus erstreckt.

12. Stoßdämpfer nach Anspruch 10 oder 11, **dadurch gekennzeichnet, dass** an dem Stopfen (5) ein Innenstützring (8) angeordnet ist, der an der Dämpferhülse (2) anliegt.

13. Stoßdämpfer nach einem der vorgenannten Ansprüche, **dadurch gekennzeichnet, dass** die wenigstens eine Dämpferhülse (2) aus Kunststoff hergestellt ist.

## Geänderte Patentansprüche

### Geänderte Patentansprüche gemäss Regel 137(2) EPÜ.

1. Stoßdämpfer, umfassend einen mit einem Fluid befüllten Zylinder (1) und eine in diesem geführten Kolbenstange (3), wobei die Kolbenstange (3) in den Zylinder (1) hinein oder durch ihn hindurchgeführt ist und mit wenigstens einem Kolben (4) versehen ist, wobei in dem Zylinder (1) den wenigstens einen Kolben (4) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (4), wodurch zwischen dem wenigstens einen Kolben (4) und der wenigstens einen Dämpferhülse (2) ein Ringspalt (43) gebildet ist und zwischen der wenigstens einen Dämpferhülse (2) und dem Zylinder (1) ein Mantelspalt (12) gebildet ist, **dadurch gekennzeichnet, dass** der Mantelspalt (12) an wenigstens einer Seite über wenigstens einen Verbindungskanal (57) mit dem Zylinderinnenraum verbunden ist, wobei in dem Verbindungskanal (57) ein Drosselventil angeordnet ist, das durch einen Abschnitt des Verbindungskanal gebildet ist, der die Kanalstruktur eines Teslaventils (571) aufweist.

2. Stoßdämpfer nach einem der vorgenannten Ansprüche, **dadurch gekennzeichnet, dass** das Drosselventil derart ausgebildet ist, dass ein Durchfluss des Fluids nur in Richtung vom Zylinderinnenraum in den Mantelspalt (12) gedrosselt ist.

3. Stoßdämpfer nach Anspruch 1 oder 2, **dadurch gekennzeichnet, dass** die wenigstens eine Dämpferhülse (2) über wenigstens einen Stopfen (5) in dem Zylinder (1) gehalten ist, wobei ein Verbindungskanal (57) und das Drosselventil in dem Stopfen angeordnet sind.

4. Stoßdämpfer nach Anspruch 3, **dadurch gekennzeichnet, dass** an beiden Enden des Zylinders (1) jeweils ein Stopfen (5) angeordnet ist, der einen Verbindungskanal (57) mit einem Drosselventil aufweist und über den eine Dämpferhülse (2) der wenigstens einen Dämpferhülse gehalten ist.

5. Stoßdämpfer nach einem der Ansprüche 3 bis 4, **dadurch gekennzeichnet, dass** der Verbindungskanal (57) zumindest bereichsweise durch einen Abschnitt der Dämpferhülse (2) begrenzt ist.

6. Stoßdämpfer nach einem der vorgenannten Ansprüche, **dadurch gekennzeichnet, dass** der Verbindungskanal (57) zumindest an einem Ende einem querschnittsvergrößerten Abschnitt (572, 573) aufweist.

7. Stoßdämpfer nach einem der Ansprüche 3 bis 6, **dadurch gekennzeichnet, dass** der Stopfen (5) aus einem weitgehend nicht elastischen Material, vorzugsweise aus Metall hergestellt ist.

8. Stoßdämpfer nach einem der Ansprüche 3 bis 7 **dadurch gekennzeichnet, dass** der Stopfen (5) über wenigstens einen Dichtring, insbesondere einen O-Ring (52), gegenüber dem Zylinder (1) abgedichtet ist.

9. Stoßdämpfer nach einem der Ansprüche 3 bis 8, **dadurch gekennzeichnet, dass** der Stopfen (5) einen zumindest bereichsweise umlaufenden Kragen (55) aufweist, in dem der Verbindungskanal (57) zumindest bereichsweise angeordnet ist und an dem die Dämpferhülse (2) anliegt.

10. Stoßdämpfer nach Anspruch 9, **dadurch gekennzeichnet, dass** ein erster endseitig des Verbindungskanals (57) angeordneter, vorzugsweise querschnittserweiterter Abschnitt (572) sich axial bis zum freien Ende des Kragens 55 erstreckt und zweiter endseitig des Verbindungskanals (57) angeordneter vorzugsweise querschnittserweiterter Abschnitt (573) sich zumindest bereichsweise radial in Richtung der Zylindermittelachse über die Dämpferhülse (2) hinaus erstreckt.

11. Stoßdämpfer nach Anspruch 9 oder 10, **dadurch gekennzeichnet, dass** an dem Stopfen (5) ein Innenstützring (8) angeordnet ist, der an der Dämpferhülse (2) anliegt.

12. Stoßdämpfer nach einem der vorgenannten Ansprüche, **dadurch gekennzeichnet, dass** die wenigstens eine Dämpferhülse (2) aus Kunststoff hergestellt ist.
